# EUROPÄISCHE PATENTANMELDUNG

(11) **EP 1 505 849 A1**
(43) Veröffentlichungstag der Anmeldung: **09.02.2005**
(21) Anmeldenummer: 04090219.9
(22) Anmeldetag: 07.06.2004
(51) Int. Cl.: H04Q 7/38, H04L 12/14, H04M 17/00

(54) **Verfahren zum Übertragen von Nachrichten zwischen Kommunikationsendgeräten**

(30) Priorität: 31.07.2003 DE 10335432
(71) Anmelder: SIEMENS AKTIENGESELLSCHAFT, 80333 München (DE)
(72) Erfinder: Burghardt, Frank, 13125 Berlin (DE); Eicke, Bertholt, 14169 Berlin (DE); Lehmann, Jens, 14612 Falkensee (DE); Schendel, Jens, 13349 Berlin (DE)

(57) **Zusammenfassung**

Die Erfindung betrifft ein Verfahren zum Übertragen von Nachrichten zwischen Kommunikationsendgeräten, mit folgenden Verfahrensschritten:
- von einem eine Nachrichtenübertragung steuernden Steuerrechner (PTT) wird ein Kennzeichen zu einem ersten Kommunikationsendgerät (KEG1) übertragen (2a), wodurch dem ersten Kommunikationsendgerät eine Berechtigung zum Senden einer Nachricht erteilt wird, und eine Reservierungsnachricht (2b) zu einem Abrechnungssystem (CS) übertragen, wodurch das Abrechnungssystem zu einer Reservierung von Ressourcen für eine Abrechnung der Übertragung der Nachricht aufgefordert wird,
- nach Empfang des Kennzeichens wird von dem ersten Kommunikationsendgerät mit dem Senden der an ein zweites Kommunikationsendgerät (KEG2) adressierten Nachricht begonnen,
- von dem ersten Kommunikationsendgerät abgesendete Teile der Nachricht werden zu dem Steuerrechner übertragen und in diesem zwischengespeichert, und
- nach Erhalt einer von dem Abrechnungssystem bei einer erfolgreichen Reservierung an den Steuerrechner übertragenen Reservierungsbestätigungsnachricht (4) wird von dem Steuerrechner die Nachricht zu dem zweiten Kommunikationsendgerät übertragen.

## Beschreibung

Die Erfindung betrifft ein Verfahren zum Übertragen von Nachrichten zwischen Kommunikationsendgeräten. Es sind allgemein Verfahren zum Übertragen von Nachrichten zwischen Kommunikationsendgeräten in Telekommunikationsnetzen bekannt, bei denen die beteiligten Kommunikationsendgeräte nicht zu beliebigen Zeitpunkten diese Nachrichten absenden können. Vielmehr erhalten die Kommunikationsendgeräte zu bestimmten Zeitpunkten eine Berechtigung zum Senden einer solchen Nachricht. Dies ist beispielsweise beim Übertragen von Nachrichten zwischen Kommunikationsendgeräten in Form von Mobilfunkgeräten (sog. "Walkie Talkies") der Fall. Von einem solchen Funkgerät kann nämlich nicht zu beliebigen Zeitpunkten eine (Sprach-) Nachricht an ein zweites Kommunikationsendgerät abgesendet werden. Vielmehr wird dem Funkgerät erst nach Betätigung einer speziellen Sprech-Taste eine Berechtigung zum Senden der Sprachnachricht erteilt. Erst dann wird von dem Kommunikationsendgerät eine Nachricht (z.B. eine Sprachnachricht eines Benutzers des Kommunikationsendgerätes) zu dem Ziel-Kommunikationsendgerät übertragen. Während dieser Übertragung der Nachricht von dem Absender-Funkgerät zu dem Ziel-Funkgerät ist es für das Ziel-Funkgerät nicht möglich, eine Nachricht zu dem Absender-Funkgerät abzusenden. Weiterhin sind allgemein Abrechnungssysteme in Telekommunikationsnetzen bekannt, mit denen die Übertragung von Nachrichten den beteiligten Kommunikationsendgeräten bzw. den Nutzern der Kommunikationsendgeräte in Rechnung gestellt werden kann.

Der Erfindung liegt die Aufgabe zugrunde, ein Verfahren zum Übertragen von Nachrichten zwischen Kommunikationsendgeräten anzugeben, bei dem die Einbeziehung eines Abrechnungssystems nur geringe Auswirkungen auf die Schnelligkeit der Nachrichtenübertragung hat.

Diese Aufgabe wird erfindungsgemäß gelöst durch ein Verfahren zum Übertragen von Nachrichten zwischen Kommunikationsendgeräten mit folgenden Verfahrensschritten:
- von einem eine Nachrichtenübertragung steuernden Steuerrechner wird ein Kennzeichen zu einem ersten Kommunikationsendgerät übertragen, wodurch dem ersten Kommunikationsendgerät eine Berechtigung zum Senden einer Nachricht erteilt wird, und eine Reservierungsnachricht zu einem Abrechnungssystem übertragen, wodurch das Abrechnungssystem zu einer Reservierung von Ressourcen für eine Abrechnung der Übertragung der Nachricht aufgefordert wird,
- nach Empfang des Kennzeichens wird von dem ersten Kommunikationsendgerät mit dem Senden der an ein zweites Kommunikationsendgerät adressierten Nachricht begonnen,
- von dem ersten Kommunikationsendgerät abgesendete Teile der Nachricht werden zu dem Steuerrechner übertragen und in diesem zwischengespeichert, und
- nach Erhalt einer Reservierungsbestätigungsnachricht (die von dem Abrechnungssystem bei einer erfolgreichen Reservierung an den Steuerrechner übertragen wird) wird von dem Steuerrechner die Nachricht zu dem zweiten Kommunikationsendgerät übertragen.
Hierbei ist insbesondere vorteilhaft, dass das Kennzeichen und die Reservierungsnachricht zeitnah zu dem Kommunikationsendgerät bzw. zu dem Abrechnungssystem übertragen werden. Dadurch kann von dem Kommunikationsendgerät mit dem Senden der Nachricht begonnen werden und gleichzeitig von dem Abrechnungssystem die nötigen Schritte zur Reservierung von Ressourcen vorgenommen werden. Selbst wenn das Abrechnungssystem für diese Reservierung eine signifikante Zeitdauer benötigt, so kann diese Zeitdauer vorteilhafterweise dazu verwendet werden, von dem Kommunikationsendgerät bereits mindestens Teile der Nachricht zu dem Steuerrechner zu übertragen; die Reservierung und die Übertragung der Nachrichtenteile zu dem Steuerrechner erfolgen also zeitlich parallel bzw. gleichzeitig. Sobald der Steuerrechner von dem Abrechnungssystem mittels der Reservierungsbestätigungsnachricht über die erfolgreiche Reservierung in Kenntnis gesetzt wird, liegen bei dem Steuerrechner bereits diese Teile der Nachricht vor und können ohne Zeitverzug zu dem Nachrichtenübertragungsziel in Form des zweiten Kommunikationsendgerätes übertragen werden. Es treten also durch die Einbeziehung des Abrechnungssystems keine wesentlichen Verzögerungen bei der Übertragung der Nachrichten auf.

Bei dem erfindungsgemäßen Verfahren können als Ressourcen Teile eines vorausbezahlten Guthabens reserviert werden. Damit kann das erfindungsgemäße Verfahren vorteilhafterweise unter Nutzung von voraus bezahlten Guthaben durchgeführt werden, welche z.B. in Zusammenhang mit sogenannten "Prepaid-Konten" auftreten.

Das erfindungsgemäße Verfahren kann so ablaufen, dass mit der Reservierungsbestätigungsnachricht eine Information über eine bestätigte Zeitdauer zu dem Steuerrechner übertragen wird, und von dem Steuerrechner nur solange die Nachricht zu dem zweiten Kommunikationsendgerät übertragen wird, bis die Übertragungsdauer die bestätigte Zeitdauer erreicht. Hierbei wird von dem Steuerrechner vorteilhafterweise maximal die bestätigte Zeitdauer (die sich z. B. aus der Höhe der reservierten Ressourcen, wie beispielsweise aus der Höhe eines reservierten Geldguthabens, ergibt) lang die Nachricht übertragen.

Das Verfahren kann so ablaufen, dass kurz vor Ablauf der bestätigten Zeitdauer von dem Steuerrechner eine weitere Reservierungsnachricht zu dem Abrechnungssystem übertragen wird, wodurch das Abrechnungssystem zu einer weiteren Reservierung von weiteren Ressourcen für die Abrechnung der Übertragung der Nachricht aufgefordert wird, und daraufhin bei bzw. nach einer erfolgreichen weiteren Reservierung eine weitere Reservierungsbestätigungsnachricht zu dem Steuerrechner übertragen wird. Damit können auch sehr lange oder große Nachrichten zu dem zweiten Kommunikationsendgerät übertragen werden.

Bei dem erfindungsgemäßen Verfahren kann auf eine Anforderungsnachricht des ersten Kommunikationsendgerätes hin das Kennzeichen von dem Steuerrechner zu dem ersten Kommunikationsendgerät übertragen werden. Dadurch kann von dem Kommunikationsendgerät dem Steuerrechner mitgeteilt werden, wann das Kommunikationsendgerät die Berechtigung zum Senden der Nachricht benötigt.

Das erfindungsgemäße Verfahren kann so ablaufen, dass eine Information über eine bestätigte Zeitdauer übertragen wird, wobei die bestätigte Zeitdauer größer ist als die für die Übertragung der Nachricht benötigte Übertragungsdauer, von dem Steuerrechner eine Differenz zwischen der bestätigten Zeitdauer und der Übertragungsdauer gebildet wird, und daraufhin von dem Steuerrechner eine neue bestätigte Zeitdauer für die Übertragung weiterer Nachrichten vorgehalten wird, wobei die neue bestätigte Zeitdauer der Differenz entspricht. Durch die Übertragung der Information über eine derart lange bestätigte Zeitdauer wird vorteilhafterweise erreicht, dass diese eine (lange) bestätigte Zeitdauer oftmals für die Übertragung von mehreren Nachrichten ausreichend ist. Dadurch können nach der Übertragung der Nachricht zu dem zweiten Kommunikationsendgerät während der neuen bestätigten Zeitdauer oftmals eine zweite Nachricht oder sogar weitere Nachrichten zu dem zweiten Kommunikationsendgerät übertragen werden, ohne dass für diese zweite Nachricht oder für diese weiteren Nachrichten eine neue Reservierung durch das Abrechnungssystem vorgenommen werden braucht. Bei entsprechender Wahl der (langen) bestätigten Zeitdauer ergibt sich also eine entsprechend lange neue bestätigte Zeitdauer, die für die Übertragung weiterer Nachrichten ausreichend ist.

Das erfindungsgemäße Verfahren kann so ablaufen, dass von dem Steuerrechner fortlaufend überprüft wird, ob innerhalb einer vorgewählten Inaktivitätsdauer weitere Nachrichten von dem ersten Kommunikationsendgerät abgesendet werden, und wenn dies der Fall ist, die weiteren Nachrichten übertragen und die dabei benötigte Übertragungsdauer bestimmt wird, oder wenn dies nicht der Fall ist, eine Abrechnungsnachricht zu dem Abrechnungssystem übertragen wird, wobei mit der Abrechnungsnachricht eine Information über die bis dahin benötigte Übertragungsdauer und eine Aufforderung zum Beenden der Reservierung der Ressourcen zu dem Abrechnungssystem übermittelt wird. Dabei wird vorteilhafterweise erreicht, dass dann für das erste Kommunikationsendgerät eine Abrechnung der bis zu diesem Zeitpunkt übertragenen Nachrichten anhand der bis dahin benötigten Übertragungsdauer angeregt wird, wenn das erste Kommunikationsendgerät eine bestimmte Zeitdauer lang (nämlich die Inaktivitätsdauer lang) keine Nachrichten absendet). Außerdem werden dann die für dieses erste Kommunikationsendgerät reservierten Ressourcen wieder freigegeben (die Reservierung der Ressourcen wird aufgehoben bzw. rückgängig gemacht). Dadurch wird verhindert, dass unbeabsichtigt Teile der Ressourcen des ersten Kommunikationsendgerätes reserviert bleiben und damit (z.B. zur Nutzung anderer Dienste) von dem ersten Kommunikationsendgerätes nicht mehr verwendet werden können.

Dabei kann das Verfahren so ablaufen, dass von dem Abrechnungssystem eine Information über die Länge der zu verwendenden Inaktivitätsdauer zu dem Steuerrechner übertragen wird.

Das Verfahren kann aber auch so ablaufen, dass von dem Steuerrechner die Länge der Inaktivitätsdauer entsprechend einer lokalen Einstellung festgesetzt wird.

Bei dem erfindungsgemäßen Verfahren kann auf einen Empfang der Abrechnungsnachricht hin von dem Abrechnungssystem die Übertragung der Nachricht unter Nutzung der reservierten Ressourcen abgerechnet werden.

Das Verfahren kann so ablaufen, dass die Übertragung der Nachricht unter Nutzung von dem ersten Kommunikationsendgerät bzw. dessen Nutzer zugeordneten Ressourcen abgerechnet wird und/oder unter Nutzung von dem zweiten Kommunikationsendgerät bzw. dessen Nutzer zugeordneten Ressourcen abgerechnet wird. Dadurch ist es vorteilhafterweise möglich, dem Sender der Nachricht oder dem Empfänger der Nachricht oder dem Sender und dem Empfänger Gebühren für die Übertragung der Nachricht in Rechnung zu stellen.

Das erfindungsgemäße Verfahren kann so ausgestaltet sein, dass von dem Abrechnungssystem die Abrechnungsnachricht mit einer niedrigen Priorität bearbeitet wird im Vergleich mit von anderen Diensten stammenden Abrechnungsnachrichten. Dadurch kann vorteilhafterweise erreicht werden, dass bei dem Abrechnungssystem für die Abrechnung der Übertragung der genannten Nachrichten lediglich geringe Anforderungen an die Hardware bezüglich der Verarbeitungsgeschwindigkeit auftreten, da die maximal zulässigen Antwortzeiten des Abrechnungssystems aufgrund der niedrigen Priorität der Abrechnungsnachricht relativ lang bemessen sein können.

Bei dem Verfahren kann allen von dem Steuerrechner übertragenen Nachrichten die niedrige Priorität zugewiesen werden, d.h. alle von dem Steuerrechner zu dem Abrechnungssystem übertragenen Nachrichten können mit einer niedrigen Priorität bearbeitet werden. Bei dieser Ausgestaltungsform des erfindungsgemäßen Verfahrens kann das Abrechnungssystem vorteilhafterweise allein aus dem Absender der Nachrichten erkennen, dass die niedrige Priorität anzuwenden ist.

Das Verfahren kann aber auch so ablaufen, dass von dem Steuerrechner mit der Abrechnungsnachricht eine Information über die Höhe der für diese Abrechnungsnachricht anzuwendenden Priorität zu dem Abrechnungssystem übertragen wird. Hierbei können vorteilhafterweise von dem Steuerrechner nachrichtenindividuell Prioritätswerte festgelegt und zu dem Abrechnungssystem übertragen werden.

Das erfindungsgemäße Verfahren kann so ablaufen, dass in allen von dem Steuerrechner zu dem Abrechnungssystem übertragenen Nachrichten eine Information über die Höhe der für diese Nachrichten anzuwendenden Priorität zu dem Abrechnungssystem übertragen wird.

Das erfindungsgemäße Verfahren kann auch so ablaufen, dass eine dem ersten Kommunikationsendgerät zugeordnete bestätigte Zeitdauer zu dem Steuerrechner übertragen wird, eine dem zweiten Kommunikationsendgerät zugeordnete bestätigte Zeitdauer zu dem Steuerrechner übertragen wird, und von dem Steuerrechner nur solange die Nachricht zu dem zweiten Kommunikationsendgerät übertragen wird, bis die Übertragungsdauer die dem ersten Kommunikationsendgerät zugeordnete bestätigte Zeitdauer erreicht oder bis die Übertragungsdauer die dem zweiten Kommunikationsendgerät zugeordnete bestätigte Zeitdauer erreicht. Bei dieser Ausgestaltungsform des erfindungsgemäßen Verfahrens kann vorteilhafterweise die Übertragung der Nachricht sowohl dem Absender in Form des ersten Kommunikationsendgerätes als auch dem Empfänger in Form des zweiten Kommunikationsendgerätes in Rechnung gestellt werden. Nur wenn sowohl für das erste als auch für das zweite Kommunikationsendgerät jeweils eine entsprechend große Ressourcenmenge reserviert ist (und damit eine entsprechend lange bestätigte Zeitdauer sowohl für das erste als auch für das zweite Kommunikationsendgerät vorliegt), wird die Nachricht zu dem zweiten Kommunikationsendgerät übertragen.

Das erfindungsgemäße Verfahren kann auch so ausgestaltet sein, dass die Nachrichten im Halbduplex-Betrieb zwischen den Kommunikationsendgeräten übertragen werden. Dies ermöglicht es, das erfindungsgemäße Verfahren beispielsweise bei der Nutzung von Funkgeräten in Form von sog. "Walkie Talkies" oder bei der Nutzung von Funkgeräten mit einer "Sprechtaste" anzuwenden.

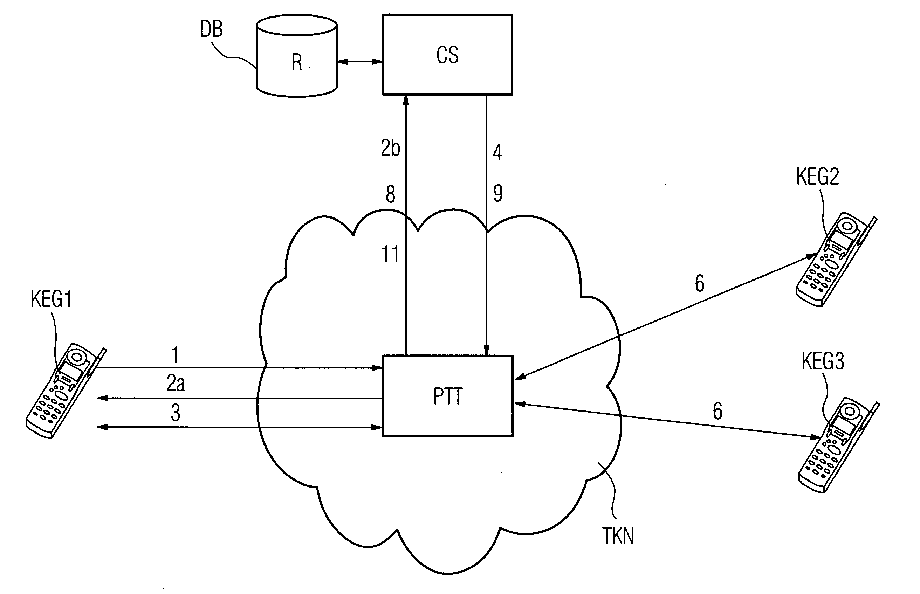

Zur weiteren Erläuterung der Erfindung ist in der einzigen Figur ein Ausführungsbeispiel mit Verfahrensschritten zur Übertragung von Nachrichten zwischen Kommunikationsendgeräten dargestellt.

In der Figur ist ein erstes Kommunikationsendgerät KEG1, ein zweites Kommunikationsendgerät KEG2 und ein drittes Kommunikationsendgerät KEG3 dargestellt, bei denen es sich z.B. um Funkgeräte in Form von "Walkie Talkies" oder um Mobiltelefone handeln kann. Zwischen diesen Kommunikationsendgeräten wird eine Telekommunikationssitzung (=Session) aufgebaut, bei der jedes Kommunikationsendgerät an die jeweiligen anderen Kommunikationsendgeräte Nachrichten in Form von Sprachmeldungen oder anderen Meldungen verschicken kann. Dabei wird durch die Vergabe eines Kennzeichens (Token) an jeweils nur ein Kommunikationsendgerät sichergestellt, dass von mehreren Kommunikationsendgeräten nicht gleichzeitig Nachrichten abgesendet können bzw. dass an mehreren Kommunikationsendgeräten nicht gleichzeitig gesprochen werden kann. Es ist nämlich nur dem das Kennzeichen besitzenden Kommunikationsendgerät möglich, eine Nachricht an die anderen Kommunikationsendgeräte zu schicken. Das Kennzeichen wird von einem Steuerrechner PTT zu dem jeweiligen Kommunikationsendgerät übertragen; dieser Steuerrechner steuert die gesamte Übertragung der Nachrichten zwischen den Kommunikationsendgeräten und stellt sicher, dass zu jedem Zeitpunkt nur maximal ein Kommunikationsendgerät das Kennzeichen zugeteilt bekommt.

Die Kommunikationsendgeräte sind im Ausführungsbeispiel in Form von Handys mit einer speziellen "Sprech-Taste" bzw. "Sendetaste" (PTT-Taste = Push-to-Talk-Taste") ausgebildet. Nach Betätigung dieser Taste wird von dem Steuerrechner ein geeigneter Zeitpunkt zum Absenden der Nachricht ermittelt und dann das Kennzeichen zu dem Kommunikationsendgerät übertragen. Der Steuerrechner (bei dem es sich um einen diensterbringenden Server eines Telekommunikationsnetzes TKN handelt) ist mit einem Abrechnungssystem CS (CS = Charging System) verbunden. Bei diesem Abrechnungssystem handelt es sich im Ausführungsbeispiel um ein sog. "Online-Abrechnungssystem", d. h. um ein Abrechnungssystem, welches zeitgleich mit der Übertragung der Nachrichten eine Abrechnung von für die Übertragung anfallenden Gebühren vornimmt. Bei diesem Abrechnungssystem CS kann es sich beispielsweise um einen Dienstesteuerungspunkt (Service Control Point, SCP) des eine Struktur eines Intelligenten Netzes aufweisenden Telekommunikationsnetzes TKN handeln, wobei dieser Dienstesteuerungspunkt Guthabenkonten (Prepaid-Konten) der Kommunikationsendgeräte KEG1,KEG2 und/oder KEG3 verwaltet. Zur Verwaltung dieser Guthabenkonten ist das Abrechnungssystem CS mit einer Datenbank DB verbunden, in der Informationen über zur Abrechnung der Übertragung der Nachrichten geeigneten Ressourcen R gespeichert sind. Im Ausführungsbeispiel sind als solche Ressourcen R Informationen über drei verschiedene Guthaben (z.B. in Euro) gespeichert, welche dem ersten Kommunikationsendgerät KEG1 bzw. dessen Nutzer, dem zweiten Kommunikationsendgerät KEG2 bzw. dessen Nutzer und dem dritten Kommunikationsendgerät KEG3 bzw. dessen Nutzer zugeordnet sind.

Bei dem Telekommunikationsnetz TKN kann es sich um ein Mobilfunknetz der zweiten oder dritten Generation handeln, beispielsweise um ein GSM-, GPRS- oder UMTS-Mobilfunknetz.

Bei dem dargestellten Ausführungsbeispiel werden Sprach-Nachrichten von dem ersten Kommunikationsgerät KEG1 zu dem zweiten Kommunikationsendgerät KEG2 und auch zu dem dritten Kommunikationsendgerät KEG3 gesendet und es findet eine Abrechnung der Übertragung der Nachrichten statt. Bei dieser Abrechnung wird entsprechend der zeitlichen Dauer der Sprachmeldungen eine Gebühr berechnet (Vergebührung), in einem vereinfachten alternativen Verfahren können anstelle der zeitabhängigen Gebühren auch festgesetzte Pauschalgebühren pro übertragener Nachricht von dem Abrechnungssystem abgerechnet werden. Mit diesen Gebühren wird der Sender der Sprachnachricht (also das erste Kommunikationsendgerät KEG1 bzw. dessen Nutzer) und/oder der Empfänger der Nachricht (also beispielsweise das zweite Kommunikationsendgerät KEG2 bzw. dessen Nutzer oder das dritte Kommunikationsendgerät KEG3 bzw. dessen Nutzer) belastet.

Bei dem Nachrichtenübertragungsverfahren wird eine "parallele Reservierung" durchgeführt. Dabei wird zeitnah mit der Übertragung des Kennzeichens zu dem ersten Kommunikationsendgerät KEG1 (wodurch dem ersten Kommunikationsendgerät eine Berechtigung zum Senden der Nachricht erteilt wird) einer Reservierungsnachricht zu dem Abrechnungssystem CS übertragen (wodurch das Abrechnungssystem zu einer Reservierung von Ressourcen für eine Abrechnung der Übertragung der Nachricht aufgefordert wird). Unmittelbar nach Empfang des Kennzeichens kann das erste Kommunikationsendgerät KEG1 eine Sprachnachricht von einem Nutzer über ein eingebautes Mikrofon aufnehmen und als elektronische Sprachnachricht an das zweite Kommunikationsendgerät KEG2 absenden. Diese Sprachnachricht (ggf. auch Teile der Sprachnachricht, wenn diese z. B. mittels an sich bekannter Streaming-Verfahren übertragen wird) gelangt zu dem Steuerrechner PTT und wird dort zwischengespeichert (gepuffert). Zeitlich parallel zu dieser Datenübertragung reserviert das Abrechnungssystem nach Empfang der Reservierungsnachricht Ressourcen (beispielsweise in Form von Geldeinheiten von vorausbezahlten Guthaben) für die Abrechnung der Übertragung dieser Nachricht. Erst nach erfolgreichem Abschluss dieser Reservierungsvorgänge und nach Senden einer die erfolgreiche Reservierung bestätigenden Reservierungsbestätigungsnachricht von dem Abrechnungssystem zu dem Steuerrechner werden die bei dem Steuerrechner gespeicherten Teile der Nachricht zu dem zweiten Kommunikationsendgerät KEG2 übertragen. Auch für eventuell später folgende weitere Nachrichten oder weitere Nachrichtenteile wird dieses Prinzip der Parallelreservierung angewandt, d. h. eine Reservierung von Ressourcen durch das Abrechnungssystem erfolgt zeitlich parallel zur Übertragung der nächsten Nachricht oder des nächsten Nachrichtenteils zu dem Steuerrechner und zeitlich parallel zur Zwischenspeicherung der nächsten Nachricht oder des nächsten Nachrichtenteils in dem Steuerrechner. Durch die Parallelreservierung werden die Anforderungen an das Abrechnungssystem bezüglich seiner Antwortzeit erheblich gesenkt. Auch bei längeren Antwortzeiten (d. h. wenn zwischen Empfang der Reservierungsnachricht durch das Abrechnungssystem und Absenden der die erfolgreiche Reservierung bestätigenden Reservierungsbestätigungsnachricht durch das Abrechnungssystem ein vergleichsweise langer Zeitraum liegt), verzögert sich die Übertragung der Nachrichten zwischen dem ersten Kommunikationsendgerät KEG1 und dem zweiten Kommunikationsendgerät KEG2 nur unbedeutend oder gar nicht, weil die von dem Abrechnungssystem zur Reservierung benötigte Zeit bereits dazu genutzt wird, um die Nachricht oder die Nachrichtenteile von dem ersten Kommunikationsendgerät KEG1 zu dem Steuerrechner PTT zu übertragen. Weiterhin erhöht sich durch die Parallelreservierung die Dienstqualität für den Nutzer des ersten Kommunikationsendgerätes KEG1 erheblich, da dieser Nutzer sofort nach Empfang des Kennzeichens mit dem Sprechen beginnen kann und das Kommunikationsendgerät KEG1 sofort nach dem Empfang des Kennzeichens mit dem Senden der Sprachnachricht beginnen kann. Für den Nutzer des Kommunikationsendgerätes KEG1 steht also der Dienst nach der Dienstanforderung sehr schnell zur Verfügung, auch wenn das Abrechnungssystem CS noch keine komplette Reservierung durchgeführt hat. Es ist also bei dem erfindungsgemäßen Verfahren nicht notwendig, dass die komplette Reservierung beendet ist und die Reservierungsbestätigungsnachricht bei dem Steuerrechner vorliegt, bevor der Dienst begonnen wird. Vielmehr findet die Diensterbringung (oder zumindest ein Teil der Diensterbringung) zeitlich gleichzeitig statt mit der Reservierung von Abrechnungs-Ressourcen durch das Abrechnungssystem.

Weiterhin wird bei dem erfindungsgemäßen Verfahren eine "Zusatz-Reservierung" durchgeführt. Bei dieser Zusatz-Reservierung teilt das Online-Abrechnungssystem CS dem Steuerrechner PTT auf die erste Reservierungsanforderung hin (mittels der Reservierungsbestätigungsnachricht) und ggf. bei weiteren Reservierungsanforderungen (mittels weiterer Reservierungsbestätigungsnachrichten) eine Information über eine bestätigte Zeitdauer mit, wobei die bestätigte Zeitdauer größer ist als die für die Übertragung der Nachricht benötigte Übertragungsdauer. Eine derartige Information über eine bestätigte Zeitdauer wird auch als "Zeitscheibe" bzw. als "Quota" bezeichnet; es handelt sich dabei um eine endnutzerbezogene (also dem ersten Kommunikationsgerät KEG1 und/oder dem zweiten Kommunikationsendgerät KEG2 zugeordnete) Zeitscheibe, die am Steuerrechner PTT um die Zeitdauer der vom ersten Kommunikationsendgerät KEG gesendeten Sprachnachrichten bzw. um die Zeitdauer der vom zweiten Kommunikationsendgerät KEG2 empfangenen Sprachnachrichten dekrementiert wird. Dieses wird auch als "budget control" bezeichnet. Eine derartige Zeitscheibe bzw. bestätigte Zeitdauer kann also eine Zeitmenge umfassen, die für mehrere Sprachnachrichten bzw. Sprachmeldungen ausreichend ist.

Zusätzlich zur Überwachung dieser bestätigten Zeitdauer wird durch den Steuerrechner PTT eine Inaktivitätsdauer (Inaktivitätsintervall, idle-time-out) überwacht. Die Überwachung der Inaktivitätsdauer beginnt mit dem Ende der Übertragung der ersten Sprachnachricht. Wenn innerhalb der Inaktivitätsdauer keine weiteren Sprachnachrichten von dem ersten Kommunikationsendgerät KEG1 abgesendet werden (das Kommunikationsendgerät KEG1 bzw. dessen Nutzer ist dann inaktiv (idle)), dann wird von dem Steuerrechner PTT eine Abrechnungsnachricht (Request) an das Abrechnungssystem übertragen und daraufhin von dem Abrechnungssystem die bis dahin zur Übertragung der Sprachnachricht(en) verbrauchte Zeit abgerechnet und die ggf. verbleibende Restreservierung an Ressourcen aufgehoben (die zu diesem Zeitpunkt noch reservierten und noch nicht verbrauchten Ressourcen werden also freigegeben).

Bei Beendigung der Übertragung einer Sprachnachricht beginnt jeweils die Inaktivitätsdauer von vorne zu laufen und wird bis zum Beginn der Übertragung einer nachfolgenden Sprachnachricht überwacht. Wenn die gesamte Sitzung zum Übertragen der Nachrichten zwischen den Kommunikationsendgeräten beendet wird (indem sich beispielsweise die Kommunikationsendgeräte aus dem Mobilfunknetz ausbuchen), dann werden ggf. noch reservierte Ressourcen freigegeben, d. h. alle dann noch bestehenden und die Sitzung betreffenden Reservierungen werden aufgehoben.

Eine Information über die Länge der zu verwendenden Innenaktivitätsdauer kann von dem Abrechnungssystem CS zu dem Steuerrechner PTT gesendet werden; alternativ kann diese Länge der Inaktivitätsdauer auch von dem Steuerrechner entsprechend einer lokalen Einstellung festgesetzt werden.

Weiterhin wird bei dem Nachrichtenübertragungsverfahren ein Aspekt "Niedrigpriorisierte Nachrichten an das Abrechnungssystem" angewendet, d.h. es werden z.B. niedrig priorisierte Abrechnungsnachrichten von dem Steuerrechner an das Abrechnungssystem gesendet. Die von dem Steuerrechner PTT an das Abrechnungssystem CS übertragenen Abrechnungsnachrichten werden daraufhin von dem Abrechnungssystem mit einer niedrigen Priorität bearbeitet, d. h. das Abrechnungssystem kann sich bei Bedarf mit der Beantwortung dieser Abrechnungsanforderung relativ lange Zeit lassen; es bestehen reduzierte Antwortzeit-Anforderungen im Vergleich mit von anderen Diensten stammenden Abrechnungsnachrichten bzw. Abrechnungs-Requests.

Dabei kann durch das Abrechnungssystem allen von dem Steuerrechner PTT stammenden Abrechnungsnachrichten eine niedrige Priorität zugewiesen werden, in diesem Falle braucht das Abrechnungssystem CS also lediglich den Absender der Abrechnungsnachrichten zu ermitteln und kann anhand dieser Absenderinformation den Abrechnungsnachrichten eine niedrige Priorität zuweisen. In einer anderen Ausführungsform des erfindungsgemäßen Verfahrens wird von dem Steuerrechner PTT mit der Abrechnungsnachricht eine Information über die Höhe der für diese Abrechnungsnachricht anzuwendenden Priorität zu dem Abrechnungssystem CS übertragen.

Durch die Anwendung dieser niedrig priorisierten Abrechnungsnachrichten ergibt sich der Vorteil, dass nur geringe Anforderungen an das Abrechnungssystem bezüglich der zu realisierenden Antwortzeiten bestehen. Daraus resultieren lediglich geringere Anforderungen an die Hardware des Abrechnungssystems, woraus sich geringe Kosten bzw. eine einfachere Realisierbarkeit des Abrechnungssystems ergeben. Die bei dem Abrechnungssystem auftretenden Kosten werden nämlich wesentlich durch die benötigte (maximale) Antwortzeit pro Abrechnungsvorgang (charging latency) und durch die Anzahl der Abrechnungsvorgänge pro Zeiteinheit bestimmt. Gegebenenfalls kann das Abrechungssystem auch gleichzeitig für eine Mehrzahl an anderen Dienste eingesetzt werden, welche Abrechnungsnachrichten mit einer höheren Priorität zu dem Abrechnungssystem übertragen und welche dementsprechend schneller Antworten erwarten.

Das Verfahren der "niedrigpriorisierten Nachrichten" kann bei allen von dem Steuerrechner PTT zu dem Abrechnungssystem CS übertragenen Nachrichten angewendet werden, also z.B. bei einer weiter unten beschriebenen Reservierungsnachricht 2b, einer weiteren Reservierungsnachricht 8 und einer Abrechnungsnachricht 11.

Bei dem erfindungsgemäßen Verfahren können diese drei Aspekte "Parallelreservierung", "Zusatz-Reservierung" und "niedrig priorisierte Nachrichten an das Abrechnungssystem" jeweils für sich allein oder auch in Kombination angewendet werden. Durch die Parallelreservierung verbessert sich die Dienstqualität für den Endnutzer des Kommunikationsendgerätes KEG1, für diesen steht der Dienst des Übertragens von Nachrichten sehr schnell zur Verfügung (reduzierte Call-Setup-Time). Durch die Verwendung der niedrig priorisierten Abrechnungsnachrichten werden die Antwortzeit-Anforderungen an das Abrechnungssystem erheblich reduziert. Dadurch reduziert sich der Kapitalaufwand für den Operator des Abrechnungssystems erheblich (reduzierter Operator-CAPEX, CAPEX = capital expenditure). Durch Anwendung der "Zusatz-Reservierung" werden die Anzahl der Abrechnungsvorgänge des Abrechnungssystems reduziert, wodurch das Abrechnungssystem ebenfalls entlastet wird. Außerdem verbessert sich für den Endnutzer des ersten Kommunikationsendgerätes KEG1 und auch für die Endnutzer der anderen Kommunikationsendgeräte die Dienstqualität, da der Dienst des Übertragens von Nachrichten noch schneller zur Verfügung steht, wenn durch die bereits zu einem frühen Verfahrensstadium vorgenommenen Zusatz-Reservierung keine zusätzliche Reservierung bei der Übertragung einer weiteren Nachricht vorgenommen zu werden braucht.

Im folgenden werden anhand der in der Figur dargestellten Nachrichten ein beispielhafter Verfahrensablauf des erfindungsgemäßen Verfahrens erläutert.

Zu Beginn des Verfahrens liegt die Situation vor, dass zwischen dem ersten Kommunikationsendgerät KEG1, dem zweiten Kommunikationsendgerät KEG2 und dem dritten Kommunikationsendgerät KEG3 eine Sitzung zum Übertragen von Nachrichten (eine sog. PTT-Session, Push-to-Talk-Session) aufgebaut ist. Es wurden innerhalb dieser Sitzung noch keine Nachrichten ausgetauscht, das Abrechnungssystem hat bisher allenfalls eine Abrechnung von Gebühren für den Aufbau der Sitzung vorgenommen. Es besteht Bedarf, von dem ersten Kommunikationsendgerät KEG1 eine Sprachnachricht an das zweite Kommunikationsendgerät KEG2 und an das dritte Kommunikationsendgerät KEG3 abzusenden. Bei dem ersten Kommunikationsendgerät KEG1 wurde nämlich die "Sendetaste" betätigt und damit ein erstmaliger Nachrichtenabsendebedarf signalisiert. Daraufhin wird von dem ersten Kommunikationsendgerät KEG1 eine Anforderungsnachricht zu dem Steuerrechner PTT übertragen (Pfeil 1), wobei diese Anforderungsnachricht die Information beinhaltet, dass der Nachrichtenabsendebedarf besteht.

Daraufhin wird von dem die Nachrichtenübertragung steuernden Steuerrechner PTT ein Kennzeichen (Token) zu dem ersten Kommunikationsendgerät KEG1 übertragen (Pfeil 2a); durch dieses Kennzeichen wird dem ersten Kommunikationsendgerät KEG1 eine Berechtigung zum Senden der Sprachnachricht erteilt. Zeitnah (im Idealfall nahezu gleichzeitig) wird von dem Steuerrechner PTT eine niedrig priorisierte Reservierungsnachricht zu dem Abrechnungssystem CS übertragen (Pfeil 2b); durch diese Reservierungsnachricht wird das Abrechnungssystem CS aufgefordert, Ressourcen für eine Abrechnung der Übertragung der Sprachnachricht zu reservieren.

Daraufhin ermittelt das Abrechnungssystem CS einen zunächst einmal anzusetzenden Preis für die Übertragung der Sprachnachricht (im einfachsten Fall wird ein Pauschalpreis pro Sprachnachricht angesetzt oder es wird für jede Sprachnachricht ein mittlerer Preis angesetzt) und es werden Ressourcen in Form von (von dem ermittelten Preis abhängenden) Guthabenbeträgen sowohl auf einem Guthabenkonto des ersten Kommunikationsendgerätes KEG1 als auch auf Guthabenkonten des zweiten Kommunikationsendgerätes KEG2 und des dritten Kommunikationsendgerätes KEG3 reserviert. Da die Reservierungsnachricht 2b von dem Steuerrechner PTT stammt, werden die Reservierungsvorgänge mit einer niedrigen Priorität durchgeführt (niedrigpriorisierte Abrechnungsnachricht). Bei dieser Reservierung werden größere Guthabenbeträge reserviert, als sie entsprechend des ermittelten Preises für die Übertragung der ersten Sprachnachricht notwendig wären. Es wird bei dem Verfahren nämlich davon ausgegangen, dass das erste Kommunikationsendgerät KEG1 als Sender der Sprachnachricht und das zweite Kommunikationsendgerät KEG2 und/oder das dritte Kommunikationsendgerät KEG3 als Empfänger der Sprachnachricht in der nächsten Zeit den Dienst des Übertragens von Nachrichten weiterhin nutzen werden, um weitere Sprachnachrichten auszutauschen. Das Abrechnungssystem CS rechnet nun die reservierten Ressourcen in bestätigte Zeitdauern um, welche angeben, wie lange unter Aufbrauchung der reservierten Ressourcen eine Sprachnachricht übertragen werden kann (z.B. je 0.10 Euro reservierten Ressourcen des Senders und des Empfängers kann eine Minute lang eine Sprachnachricht übertragen werden). Eine Information über die bestätigte Zeitdauer (auch "granted quota" genannt) wird daraufhin mit einer Reservierungsbestätigungsnachricht zu dem Steuerrechner übertragen (Pfeil 4).

Die Zeit von der Vergabe des Kennzeichens an das erste Kommunikationsendgerät bis zum Eintreffen der Information über die bestätigte Zeitdauer bei dem Steuerrechner wurde von dem ersten Kommunikationsendgerät KEG1 dazu genutzt, mittels eines an sich bekannten Streaming-Verfahrens (z.B. mittels des RTP/RTCP-Verfahrens; RTP/RTCP = Real-time Transport Protocol / Real-time Transport Control Protocol) zumindest Teile der Sprachnachricht an den Steuerrechner PTT zu übertragen (Pfeil 3). Diese Teile der Sprachnachricht (evtl. auch schon die gesamte Sprachnachricht) wurden in dem Steuerrechner zwischengespeichert (gepuffert). Alternativ können diese Teile der Sprachnachricht auch in einem anderen Speicherknoten des Telekommunikationsnetzes (beispielsweise in einem Media-Server) zwischengespeichert werden.

Sobald die Information über die bestätigte Zeitdauer bei dem Steuerrechner PTT vorliegt, sendet der Steuerrechner PTT die zwischengespeicherten Teile der Sprachnachricht (Sprachmeldung) an das zweite Kommunikationsendgerät KEG2 und an das dritte Kommunikationsendgerät KEG3 weiter (Pfeile 6). Die zur Übertragung benötigte Übertragungsdauer wird von dem Steuerrechner PTT gemessen. Von dem Steuerrechner PTT wird die Sprachnachricht nur so lange zu dem zweiten Kommunikationsendgerät KEG2 und dem dritten Kommunikationsendgerät KEG3 übertragen, bis die für die Übertragung notwendige Übertragungsdauer die bestätigte Zeitdauer erreicht. Kurz vor Ablauf der bestätigten Zeitdauer (d. h. kurz bevor die Übertragungsdauer die bestätigte Zeitdauer erreicht) sendet der Steuerrechner eine weitere Reservierungsnachricht zu dem Abrechnungssystem CS, wodurch das Abrechnungssystem zu einer weiteren Reservierung von weiteren Ressourcen für die Übertragung der Sprachnachricht aufgefordert wird (Pfeil 8). (Dieser Fall kann beispielsweise auftreten, wenn die erste Sprachnachricht wesentlich länger ist als eine ursprünglich bei der Reservierung der Ressourcen angenommene Nachrichtenlänge, so dass auch die vorgenommene Zusatzreservierung nicht mehr für die komplette Nachrichtenübertragung ausreichend ist.) Daraufhin führt das Abrechnungssystem in bekannter Weise eine weitere Reservierung von weiteren Ressourcen durch und sendet eine weitere Reservierungsbestätigungsnachricht mit einer weiteren bestätigten (längeren) Zeitdauer zu dem Steuerrechner PTT (Pfeil 9). Eventuell auftretende Wartezeiten auf die weitere Reservierungsbestätigungsnachricht werden wieder dazu genutzt, um Teile der jeweiligen zu übertragenden Nachricht von dem ersten Kommunikationsendgerät KEG1 zu dem Steuerrechner PTT zu übertragen und dort zwischenzuspeichern.

Bei Beendigung der Übertragung der Sprachnachricht zu den Kommunikationsendgeräten KEG2 und KEG3 wird von dem Steuerrechner PTT eine Differenz zwischen der bestätigten Zeitdauer und der benötigten Übertragungsdauer gebildet und diese Differenz (d. h. die noch nicht verbrauchte bestätigte Zeit) wird als neue bestätigte Zeitdauer für die Übertragung von weiteren Sprachnachrichten gespeichert. Daraufhin wird von dem Steuerrechner fortlaufend (zu vorgegebenen Zeitpunkten bzw. in kurzen zeitlichen Abständen) überprüft, ob innerhalb einer vorgewählten Zeitdauer (die im Folgenden Inaktivitätsdauer genannt wird) weitere Nachrichten von dem ersten Kommunikationsendgerät KEG1 abgesendet werden. Wenn dies der Fall ist, dann werden diese weiteren Sprachnachrichten zu ihrem jeweiligen Ziel übertragen, die dabei benötigte Übertragungsdauer wird gemessen und von der neuen bestätigten Zeitdauer abgezogen. In diesem Fall ist es nicht notwendig, zusätzliche Reservierungsnachrichten an das Abrechnungssystem CS zu senden. Die Übertragungsdauer kann von dem Steuerrechner auch unter Nutzung des Zeitpunktes der Übertragung des Kennzeichens an das entsprechende Sende-Kommunikationsendgerät bestimmt werden, indem dieser Zeitpunkt als Beginn der Übertragung der Nachricht genutzt wird.

Wenn aber während der vorgewählten Inaktivitätsdauer keine weiteren Nachrichten von dem ersten Kommunikationsendgerät abgesendet werden, dann wird eine niedrig priorisierte Abrechnungsnachricht (Pfeil 11) zu dem Abrechnungssystem CS übertragen, wobei mit dieser Abrechnungsnachricht eine Information über die bis dahin benötigte Übertragungsdauer zu dem Abrechnungssystem CS übertragen wird und zusätzlich das Abrechnungssystem aufgefordert wird, ggf. noch bestehende Reservierungen an Ressourcen zu beenden bzw. aufzuheben.

Eine Information über die Länge der zu verwendenden Inaktivitätsdauer kann von dem Abrechnungssystem CS zusammen mit der Reservierungsbestätigungsnachricht 4 und/oder der weiteren Reservierungsbestätigungsnachricht 9 zu dem Steuerrechner PTT übertragen werden. Alternativ kann von dem Steuerrechner PTT die Länge der Inaktivitätsdauer entsprechend einer lokalen Einstellung (z. B. Default-Wert: 30 Minuten) festgesetzt werden.

Die von dem Steuerrechner PTT zu dem Abrechnungssystem CS übertragene Abrechnungsnachricht 11 und auch alle anderen von dem Steuerrechner PTT stammenden Nachrichten werden von dem Abrechnungssystem mit einer niedrigen Priorität abgearbeitet.

Beispielsweise können folgende Nachrichten bei dem erfindungsgemäßen Verfahren genutzt werden:
Nachricht 1 : RTCP: App: Floor Request
Nachricht 2a: RTCP: App: Floor Grant
Nachricht 2b: Diameter: Accounting Request (Start_Record)
Nachricht 3 : RTP Streaming
Nachricht 4 : Diameter: Accounting Answer (Start_Record)
Nachricht 6 : RTCP: App: Floor Taken + RTP Streaming
Nachricht 8 : Diameter: Accounting Request (Interim_Record)
Nachricht 9 : Diameter: Accounting Answer (Interim_Record)
Nachricht 11: Diameter: Accounting Request (Interim_Record)

Von dem Abrechnungssystem CS können Gebühren für die Übertragung der Sprachnachrichten sowohl dem ersten Kommunikationsendgerät KEG1 als Sender als auch z. B. dem zweiten Kommunikationsendgerät KEG2 als Empfänger der Sprachnachricht in Rechnung gestellt werden. Dementsprechend kann bei dem Verfahren eine dem ersten Kommunikationsendgerät KEG1 zugeordnete bestätigte Zeitdauer mit der Reservierungsbestätigungsnachricht 4 zu dem Steuerrechner PTT übertragen werden und eine dem zweiten Kommunikationsendgerät KEG2 zugeordnete bestätigte Zeitdauer mit der Reservierungsbestätigungsnachricht 4 zu dem Steuerrechner PTT übertragen werden. Von dem Steuerrechner wird nur so lange die entsprechende Sprachnachricht zu dem zweiten Kommunikationsendgerät übertragen, bis die auftretende Übertragungsdauer entweder die dem ersten Kommunikationsendgerät zugeordnete bestätigte Zeitdauer erreicht oder bis die auftretende Übertragungsdauer die dem zweiten Kommunikationsendgerät zugeordnete bestätigte Zeitdauer erreicht. Danach sind bezüglich des ersten Kommunikationsendgerätes oder bezüglich des zweiten Kommunikationsendgerätes weitere Reservierungsnachrichten zu dem Abrechnungssystem zu übertragen, um das Abrechnungssystem zu einer weiteren Reservierung von weiteren Ressourcen aufzufordern.

Bei dem erfindungsgemäßen Verfahren werden die Nachrichten im Halbduplex-Betrieb zwischen den Kommunikationsendgeräten übertragen. Damit ergibt sich ein Verfahren, bei dem jeweils nur eines der Kommunikationsendgeräte zu einem Zeitpunkt eine Sprachnachricht absenden kann.

Bei dem beschriebenen Verfahren ist besonders vorteilhaft, dass für den Benutzer der Kommunikationsendgeräte eine hohe Dienstqualität erreicht wird. Es treten nämlich sowohl für den Sender als auch für den Empfänger der Nachricht nur sehr geringe Wartezeiten auf (kurze Call-Setup-Time). Weiterhin treten bei dem Abrechnungssystem nur relativ geringe Anforderungen bezüglich der Reaktionszeiten des Abrechnungssystems auf Reservierungsnachrichten auf, da die (ggf. etwas längere) Reaktionszeit bereits für die Übertragung der Nachrichten von dem Sender-Kommunikationsendgerät KEG1 zu dem Steuerrechner PTT genutzt werden kann.

## Patentansprüche

1. Verfahren zum Übertragen (3,6) von Nachrichten zwischen Kommunikationsendgeräten (KEG1,KEG2,KEG3) mit folgenden Verfahrensschritten:
- von einem eine Nachrichtenübertragung steuernden Steuerrechner (PTT) wird ein Kennzeichen zu einem ersten Kommunikationsendgerät (KEG1) übertragen (2a), wodurch dem ersten Kommunikationsendgerät (KEG1) eine Berechtigung zum Senden einer Nachricht erteilt wird, und eine Reservierungsnachricht (2b) zu einem Abrechnungssystem (CS) übertragen, wodurch das Abrechnungssystem (CS) zu einer Reservierung von Ressourcen (R) für eine Abrechnung der Übertragung der Nachricht aufgefordert wird,
- nach Empfang des Kennzeichens (2a) wird von dem ersten Kommunikationsendgerät (KEG1) mit dem Senden der an ein zweites Kommunikationsendgerät (KEG2) adressierten Nachricht begonnen (3),
- von dem ersten Kommunikationsendgerät (KEG1) abgesendete Teile der Nachricht werden zu dem Steuerrechner (PTT) übertragen (3) und in diesem zwischengespeichert, und
- nach Erhalt einer von dem Abrechnungssystem (CS) bei einer erfolgreichen Reservierung an den Steuerrechner (PTT) übertragenen Reservierungsbestätigungsnachricht (4) wird von dem Steuerrechner (PTT) die Nachricht zu dem zweiten Kommunikationsendgerät (KEG2) übertragen (6).

2. Verfahren nach Anspruch 1,
**dadurch gekennzeichnet, dass**
- als Ressourcen (R) Teile eines vorausbezahlten Guthabens reserviert werden.

3. Verfahren nach Anspruch 1 oder 2,
**dadurch gekennzeichnet, dass**
- mit der Reservierungsbestätigungsnachricht (4) eine Information über eine bestätigte Zeitdauer zu dem Steuerrechner (PTT) übertragen wird, und
- von dem Steuerrechner (PTT) nur solange die Nachricht zu dem zweiten Kommunikationsendgerät übertragen (6) wird, bis die Übertragungsdauer die bestätigte Zeitdauer erreicht.

4. Verfahren nach einem der vorhergehenden Ansprüche,
**dadurch gekennzeichnet, dass**
- kurz vor Ablauf der bestätigten Zeitdauer von dem Steuerrechner (PTT) eine weitere Reservierungsnachricht (8) zu dem Abrechnungssystem (CS) übertragen wird, wodurch das Abrechnungssystem zu einer weiteren Reservierung von weiteren Ressourcen (R) für die Abrechnung der Übertragung (6) der Nachricht aufgefordert wird, und
- daraufhin bei einer erfolgreichen weiteren Reservierung eine weitere Reservierungsbestätigungsnachricht (9) zu dem Steuerrechner übertragen wird.

5. Verfahren nach einem der vorhergehenden Ansprüche,
**dadurch gekennzeichnet, dass**
- auf eine Anforderungsnachricht (1) des ersten Kommunikationsendgerätes (KEG1) hin das Kennzeichen von dem Steuerrechner (PTT) zu dem ersten Kommunikationsendgerät (KEG1) übertragen (2a) wird.

6. Verfahren nach einem der Ansprüche 3 bis 5,
**dadurch gekennzeichnet, dass**
- eine Information über eine bestätigte Zeitdauer übertragen (4) wird, wobei die bestätigte Zeitdauer größer ist als die für die Übertragung (6) der Nachricht benötigte Übertragungsdauer,
- von dem Steuerrechner (PTT) eine Differenz zwischen der bestätigten Zeitdauer und der Übertragungsdauer gebildet wird, und
- daraufhin von dem Steuerrechner (PTT) eine neue bestätigte Zeitdauer für die Übertragung weiterer Nachrichten vorgehalten wird, wobei die neue bestätigte Zeitdauer der Differenz entspricht.

7. Verfahren nach Anspruch 6,
**dadurch gekennzeichnet, dass**
- von dem Steuerrechner (PTT) fortlaufend überprüft wird, ob innerhalb einer vorgewählten Inaktivitätsdauer weitere Nachrichten von dem ersten Kommunikationsendgerät (KEG1) abgesendet werden, und
- wenn dies der Fall ist, die weiteren Nachrichten übertragen und die dabei benötigte Übertragungsdauer bestimmt wird, oder
- wenn dies nicht der Fall ist, eine Abrechnungsnachricht (11) zu dem Abrechnungssystem (CS) übertragen wird, wobei mit der Abrechnungsnachricht (11) eine Information über die bis dahin benötigte Übertragungsdauer und eine Aufforderung zum Beenden der Reservierung der Ressourcen zu dem Abrechnungssystem (CS) übermittelt wird.

8. Verfahren nach Anspruch 7,
**dadurch gekennzeichnet, dass**
- von dem Abrechnungssystem (CS) eine Information über die Länge der zu verwendenden Inaktivitätsdauer zu dem Steuerrechner (PTT) übertragen wird.

9. Verfahren nach Anspruch 7,
**dadurch gekennzeichnet, dass**
- von dem Steuerrechner (PTT) die Länge der Inaktivitätsdauer entsprechend einer lokalen Einstellung festgesetzt wird.

10. Verfahren nach einem der Ansprüche 7 bis 9,
**dadurch gekennzeichnet, dass**
- auf einen Empfang der Abrechnungsnachricht (11) hin von dem Abrechnungssystem (CS) die Übertragung (6) der Nachricht unter Nutzung der reservierten Ressourcen (R) abgerechnet wird.

11. Verfahren nach einem der Ansprüche 7 bis 10,
**dadurch gekennzeichnet, dass**
- die Übertragung der Nachricht unter Nutzung von dem ersten Kommunikationsendgerät (KEG1) bzw. dessen Nutzer zugeordneten Ressourcen abgerechnet wird und/oder unter Nutzung von dem zweiten Kommunikationsendgerät (KEG2) bzw. dessen Nutzer zugeordneten Ressourcen abgerechnet wird.

12. Verfahren nach Anspruch 10 oder 11,
**dadurch gekennzeichnet, dass**
- von dem Abrechnungssystem (CS) die Abrechnungsnachricht (11) mit einer niedrigen Priorität bearbeitet wird.

13. Verfahren nach einem der Ansprüche 1 bis 11,
**dadurch gekennzeichnet, dass**
- die von dem Steuerrechner (PTT) zu dem Abrechnungssystem (CS) übertragenen Nachrichten (2b,8,11) mit einer niedrigen Priorität bearbeitet werden.

14. Verfahren nach Anspruch 12,
**dadurch gekennzeichnet, dass**
- von dem Steuerrechner (PTT) mit der Abrechnungsnachricht (11) eine Information über die Höhe der für diese Abrechnungsnachricht (11) anzuwendenden Priorität zu dem Abrechnungssystem (CS) übertragen wird.

15. Verfahren nach einem der Ansprüche 1 bis 13,
**dadurch gekennzeichnet, dass**
- in den von dem Steuerrechner (PTT) zu dem Abrechnungssystem (CS) übertragenen Nachrichten (2b,8,11) eine Information über die Höhe der für diese Nachrichten (2b,8,11) anzuwendenden Priorität zu dem Abrechnungssystem (CS) übertragen wird.

16. Verfahren nach einem der Ansprüche 3 bis 15,
**dadurch gekennzeichnet, dass**
- eine dem ersten Kommunikationsendgerät (KEG1) zugeordnete bestätigte Zeitdauer zu dem Steuerrechner (PTT) übertragen wird,
- eine dem zweiten Kommunikationsendgerät (KEG2) zugeordnete bestätigte Zeitdauer zu dem Steuerrechner (PTT) übertragen wird, und
- von dem Steuerrechner nur solange die Nachricht zu dem zweiten Kommunikationsendgerät übertragen (6) wird, bis die Übertragungsdauer die dem ersten Kommunikationsendgerät (KEG1) zugeordnete bestätigte Zeitdauer erreicht oder bis die Übertragungsdauer die dem zweiten Kommunikationsendgerät (KEG2) zugeordnete bestätigte Zeitdauer erreicht.

17. Verfahren nach einem der vorhergehenden Ansprüche,
**dadurch gekennzeichnet, dass**
- die Nachrichten im Halbduplex-Betrieb zwischen den Kommunikationsendgeräten (KEG1,KEG2,KEG3) übertragen werden.
